# EUROPÄISCHE PATENTANMELDUNG

(11) **EP 2 058 336 A1**
(43) Veröffentlichungstag der Anmeldung: **13.05.2009**
(21) Anmeldenummer: 07021515.7
(22) Anmeldetag: 06.11.2007
(51) Int. Cl.: C08B 11/193

(54) **Ternäre Mischether**

(71) Anmelder: Dow Wolff Cellulosics GmbH, 29699 Bomlitz (DE)
(72) Erfinder: Brackhagen, Meinolf, 29664 Walsrode (DE); Dannhorn, Wolfgang, 29614 Soltau (DE); Kull, Arne, 29699 Bomlitz (DE); Mania, Dan, Saline MI 48176 (US); Schlesiger, Hartwig, 29664 Walsrode (DE)
(74) Vertreter: Polypatent

(57) **Zusammenfassung**

Die Erfindung betrifft neuartige Cellulosederivate mit geringer Oberflächenquellung in wässriger Suspension, hoher relativer High-Shear-Viskosität und hohem thermischen Flockpunkt in Wasser, sowie deren Einsatz in Baustoffsystemen.

## Beschreibung

Die Erfindung betrifft neuartige Cellulosederivate mit geringer Oberflächenquellung in wässriger Suspension, hoher relativer High-Shear-Viskosität und hohem thermischen Flockpunkt in Wasser, sowie deren Einsatz in dispersionsgebundenen Baustoffsystemen, bevorzugt in dispersionsgebundenen Farben.

Cellulosederivate finden aufgrund ihrer hervorragenden Eigenschaften und ihrer physiologischen Unbedenklichkeit vielseitig Anwendung, beispielsweise als Verdicker, Kleber, Binde- und Dispergiermittel, Wasserrückhaltemittel, Schutzkolloide, Stabilisatoren sowie als Suspendier-, Emulgier- und Filmbildemittel.

Ein Anwendungsgebiet für Cellulosederivate ist der Einsatz als Verdicker in Dispersionsfarben. Die Viskosität der Dispersionsfarben ist in der Regel abhängig von der Schergeschwindigkeit, wobei die Viskosität mit steigender Schergeschwindigkeit abnimmt. Beim Vergleich verschiedener Cellulosederivate wird generell beobachtet, dass die schergeschwindigkeitsabhängige Viskositätsabnahme in den damit verdickten Dispersionsfarben umso größer ausfällt, je größer der Wert für die mittlere Kettenlänge der Celluloseketten ist. Die Viskosität bei hoher Schergeschwindigkeit (High-Shear-Viskosität) ist daher bei Verwendung langkettiger cellulosischer Verdicker im Allgemeinen geringer als bei solchen mit kürzerer Cellulosekettenlänge.

Als Verdicker für Dispersionsfarben werden in Dispersionsfarben wird insbesondere Hydroxyethylcellulose (HEC), aber auch Methylhydroxyethylcellulose (MHEC) oder Methylhydroxypropylcellulose (MHPC) eingesetzt.

MHEC und MHPC sind bei geeigneter Wahl der Substitutionsgrade in heißem Wasser nicht löslich und können daher bei der Herstellung durch Wäsche mit heißem Wasser von Salz und anderen wasserlöslichen Nebenprodukten gereinigt werden. Im Gegensatz dazu sind HEC in heißem Wasser löslich und können daher nicht mit heißem Wasser von Salz und anderen wasserlöslichen Nebenprodukten gereinigt werden.

Beim Einsatz dieser Cellulosederivate geht der Anwender häufig so vor, dass zunächst eine Suspension des Cellulosederivates in Wasser hergestellt wird, welche dann mit weiteren Bestandteilen der Farbrezeptur abgemischt wird. Hierzu muss die Dispersion des Cellulosederivates rühr- und pumpfähig sein.

Damit die Cellulosederivate nicht bei Kontakt mit Wasser spontan verdickend wirken werden sie für die Anwendung in Dispersionsfarben im Allgemeinen lösungsverzögert hergestellt.

Diese Lösungsverzögerung wird meist durch eine temporäre Vernetzung mit einem Dialdehyd wie z.B. Glyoxal bewirkt. Das Cellulosederivat ist durch die Vernetzung zunächst wasserunlöslich, löst sich jedoch in Abhängigkeit der Temperatur und des pH-Wertes der Suspension im Wasser und wirkt dann verdickend.

Neben der Lösungsverzögerung nimmt die Wasseraufnahme des Cellulosederivates Einfluss auf die Rühr- und Pumpfähigkeit einer Cellulosederivat-Suspension. Hierbei wird Wasser durch Oberflächenquellung des Cellulosederivates physikalisch durch das Cellulosederivat gebunden, ohne dass das Cellulosederivat in Lösung geht. Ist die Oberflächenquellung des Cellulosederivates hoch, so kann im Einzelfall die Gesamtmenge Wasser der Suspension gebunden werden und die Rühr- und Pumpfähigkeit der Cellulosederivat-Suspension verloren gehen.

Gängige MHEC werden zwar lösungsverzögert angeboten, quellen jedoch in wässriger Suspension stark. Daher geht die Rühr- und Pumpfähigkeit der MHEC-Suspensionen bereits nach kurzer Zeit verloren. Die in Dispersionsfarben eingesetzten HEC erfüllen zwar die Anforderungen bzgl. Lösungsverzögerung und geringer Oberflächenquellung in wässriger Suspension, weisen jedoch andere Nachteile auf, etwa die oben erwähnte Löslichkeit in heißem Wasser und weitere unten genannte Nachteile.

Zwar lässt sich die Oberflächenquellung von MHEC nachträglich durch additive Behandlungsschritte beeinflussen. So beschreibt beispielsweise die JP 48-34961 eine thermisch-mechanische Behandlung des Produktes bei 60-130°C über einen Zeitraum von 4-15 Stunden in einem geschlossenen Mischbehälter bei 50-200 UpM. Dieser Behandlungsprozess ist dementsprechend jedoch mit hohem zusätzlichem apparativem Aufwand sowie Zeit- und Energieaufwand verbunden.

Eine weitere Anforderung der Anwender von Cellulosederivaten für die Verdickung von Dispersionsfarben ist eine hohe High-Shear-Viskosität. Die Viskosität der Dispersionsfarben ist kein konstanter Wert sondern ändert sich abhängig von der Schergeschwindigkeit. Dabei nimmt die Viskosität mit steigender Schergeschwindigkeit ab. Dieser Effekt zeigt sich in der Praxis darin, dass im Ruhezustand z.B. bei der Lagerung im Gebinde ein hoher Viskositätswert für die Eigenschaften der Dispersionsfarbe steht, wodurch die Stabilität gegen Sedimentation der enthaltenen Füllstoffe und Pigmente unterstützt wird. Dem gegenüber repräsentiert beim Verarbeiten unter relativ hoher Scherung mit Rolle oder Pinsel ein deutlich niedrigerer Viskositätswert die Eigenschaften der Dispersionsfarbe, was ein leichtes und zügiges Verarbeiten erlaubt. Die Viskosität bei hoher Schergeschwindigkeit wird hier High-Shear-Viskosität genannt. Die High-Shear-Viskosität darf aber nicht zu niedrig sein, da sonst beim einmaligen Farbauftrag keine genügende Schichtdicke der Beschichtung erreicht wird. Zusätzlich kann es bei zu niedriger High-Shear-Viskosität zu vermehrter Bildung von Farbspritzern kommen.

Bei der Einstellung der Viskosität der Dispersionsfarbe allein durch Variation der Einsatzmenge eines bestimmten Cellulosederivates als Verdicker hat der Anwender nicht die Möglichkeit die High-Shear-Viskosität unabhängig vom Gesamt-Fließverhalten der Dispersionsfarbe einzustellen. Durch eine höhere Einsatzmenge steigt die High-Shear-Viskosität, die Dispersionsfarbe kann aber dadurch insgesamt zu zähfließend werden und ist dann nicht mehr gut zu verarbeiten, zum Beispiel weil die Verlaufseigenschaften zu schlecht werden und damit keine gute Oberfläche der Beschichtung erhalten wird.

Nach dem Stand der Technik sind verschiedene Wege bekannt, die High-Shear-Viskosität anzuheben ohne dass die Dispersionsfarbe insgesamt zu zähfließend wird. Dazu zählen der kombinierte Einsatz von Cellulosederivat und synthetischen Assoziativ-Verdickern bzw. die Verwendung von assoziativ verdickenden Cellulosederivaten, wobei die Wirksamkeit der synthetischen Assoziativ-Verdicker und der assoziativ verdickenden Cellulosederivate stark von den übrigen Bestandteilen der Dispersionsfarbe, beispielsweise Tensiden, beeinflusst wird. Dadurch wird die Einstellung des Viskositätsverhaltens der Farbe erschwert und Änderungen an der Rezeptur wirken sich stark auf das Viskositätsverhalten aus.

Eine schnellere Rezepturfindung ist zu erwarten, wenn die High-Shear-Viskosität gezielt angehoben wird, indem ein Cellulosederivat mit geringerer Kettenlänge in höherer Menge eingesetzt wird. Diese Lösung des Problems ist aber Kostenintensiv, da eine höhere Celluloseethermenge erforderlich ist.

Die in Dispersionsfarben eingesetzten HEC erfüllen die Anforderungen bzgl. einer hohen High-Shear-Viskosität nicht, während MHEC diese vom Anwender geforderte hohe High-Shear-Viskosität liefern.

Eine weitere relevante Größe für die Praxis ist der thermische Flockpunkt einiger Cellulosederivate. Der thermische Flockpunkt in Wasser bewirkt, dass das Cellulosederivat oberhalb einer für das Cellulosederivat typischen Temperatur wasserunlöslich wird. Da Dispersionsfarben im Produktionsprozess oder bei der späteren Spedition, Lagerung oder Anwendung durchaus Temperaturen von bis zu 65 °C ausgesetzt sein können, ist es wichtig, dass der Flockpunkt der Cellulosederivate mindestens größer als 65 °C ist. Hierdurch wird ein ausreichender Abstand zu den üblicherweise in der Praxis vorkommenden Temperaturen gewahrt.

Die in Dispersionsfarben verwendeten HEC und MHEC erfüllen diese Anforderung. Die HEC weist keinen thermischen Flockpunkt in Wasser auf. Der thermische Flockpunkt von MHEC für Dispersionsfarben liegt im Allgemeinen oberhalb 70 °C. Jedoch konnten sich andere Cellulosederivate mit einem thermischen Flockpunkt in Wasser wie beispielsweise MHPC nicht breit im Markt etablieren, da diese einen thermischen Flockpunkt kleiner 70 °C aufweisen.

Auch die Verwendung von MHEHPC ist dem Fachmann bekannt. Die US 3,873,518 beschreibt MHEHPC mit einem Methoxylgehalt von 6-12,5 Gew.-%, einem Hydroxyethoxylgehalt von 10-22 Gew.-% und einem Hydroxypropoxylgehalt von 14-32 Gew.-% und deren Einsatz als Verdicker in Dispersionsfarben. Diese Produkte weisen zwar einen Flockpunkt größer 70 °C auf, haben jedoch den gleichen Nachteil wie die HEC bezüglich einer geringen High-Shear-Viskosität.

In der EP 0 598 282 werden MHEHPC mit einem Substitutionsgrad durch Hydroxyalkylgruppen von kleiner 0,7, speziell kleiner 0,6, insbesondere kleiner 0,3 und einem Substitutionsgrad an Methylgruppen von 1,6 bis 2,5, insbesondere 1,8 bis 2,4 als Verdickungsmittel für Abbeizer beschrieben.

In der EP 0 120 430 werden MHEHPC mit einem Methylierungsgrad von 0,9 bis 2,1, einem Hydroxyethylierungsgrad von 0,2 bis 0,5 und einem Hydroxypropylierungsgrad von 0,08 bis 0,4 beschrieben. Diese Produkte weisen einen Flockpunkt kleiner 70 °C auf.

Sowohl die Produkte gemäß der EP 0 598 282, als auch die Produkte gemäß der EP 0 120 430 weisen eine hohe Oberflächenquellung auf und liefern Produkte mit einem Flockpunkt < 70 °C.

Celluloseether sind allgemein dadurch erhältlich, dass man Cellulose mit wässriger Alkalihydroxid-Lösung alkalisiert, die alkalisierte Cellulose mit einem oder mehreren Alkylenoxiden, und/oder einem oder mehreren Alkylhalogeniden reagieren lässt und den erhaltenen Celluloseether aus dem Reaktionsgemisch abtrennt, gegebenenfalls reinigt und trocknet sowie zerkleinert.

Wie erwähnt, sind lösungsverzögerte Celluloseether an sich bekannt, vgl. etwa Ullmanns Encyclopedia of Technical Chemistry, Volume A5, S. 472-473.

Lösungsverzögerte Celluloseether werden beispielsweise gemäß dem Stand der Technik hergestellt, indem der aus dem Reaktionsgemisch abgetrennte und gereinigte Celluloseether vor der Mahlung und Trocknung mit Glyoxal versetzt und vernetzt wird. Die EP 1 316 563 beschreibt ein solches Verfahren zur Lösungsverzögerung.

Veretherungsverfahren zur Herstellung von gemischten Celluloseethern sind allgemein Stand der Technik und werden beispielsweise in der EP 1 180 526 und EP 1 279 680 beschrieben.

Da keiner der bisher bekannten Cellulosederivate alle oben genannten Anforderungen erfüllt, besteht weiterhin dringender Bedarf, Cellulosederivate zur Verfügung zu stellen, welche
- ohne zusätzliche nachträgliche Behandlungsschritte des pulverförmigen Produktes eine geringe Oberflächenquellung in wässriger Dispersion zeigen,
- eine hohe High-Shear-Viskosität als wässrige Lösung aufweisen und
- einen thermischen Flockpunkt von mindestens größer 65 °C in Wasser aufweisen.

Diese Aufgabe konnte nun überraschenderweise dadurch gelöst werden, dass man ternäre Cellulosederivate Methylhydroxyethylhydroxypropylcellulose (MHEHPC) mit einer spezifischen Substitution an Hydroxyethylgruppen, Hydroxypropylgruppen und Methylgruppen verwendet.

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben.

Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben.

Die Bestimmung der Seitengruppen, also der MS- und DS-Werte, erfolgt anhand der Zeisel-Methode (Literatur: G. Bartelmus und R. Ketterer, Z. Anal. Chem. 286 (1977) 161-190).

Ein erster Gegenstand der Erfindung sind die nachfolgend beschriebenen MHEHPC.

Die erfindungsgemäßen MHEHPC besitzen einen MS (HE) von 0,10 bis 0,70, bevorzugt von 0,15 bis 0,70, weiter bevorzugt von 0,20 bis 0,65; einen MS (HP) von 0,30 bis 1,00, bevorzugt von 0,30 bis 0,90, weiter bevorzugt von 0,35 bis 0,80; und einen DS (M) von 1,15 bis 1,80, bevorzugt von 1,20 bis 1,75.

Besonders bevorzugt besitzen die erfindungsgemäßen MHEHPC einen MS (HE) von 0,24 bis 0,60, weiter bevorzugt von 0,27 bis 0,55, einen MS (HP) von 0,41 bis 0,75, weiter bevorzugt von 0,42 bis 0,70, und einen DS (M) von 1,22 bis 1,70, weiter bevorzugt von 1,25 bis 1,65.

Ganz besonders bevorzugt besitzen die erfindungsgemäßen MHEHPC einen MS (HE) von 0,29 bis 0,50 und einen MS (HP) von 0,44 bis 0,65 und einen DS (M) von 1,30 bis 1,60.

Der gesamte Hydroxyalkylierungsgrad MS (HA) gleich MS (HE) plus MS (HP) der erfindungsgemäßen MHEHPC beträgt dabei im allgemeinen 0,45 bis 1,60, bevorzugt 0,55 bis 1,5, weiter bevorzugt 0,65 bis 1,4, besonders bevorzugt 0,70 bis 1,30.

Die Viskosität einer Lösung der erfindungsgemäßen MHEHPC in Wasser bei einer Einsatzmenge von 2 Gew.-% bezogen auf die Lösung und einer Schergeschwindigkeit von 2,55 1/s, gemessen bei 20 °C, kann 100 bis 200.000 mPa·s betragen. Bevorzugt werden MHEHPC-Typen mit einer Viskosität von 1.000 bis 80.000 mPa·s, weiter bevorzugt über 30.000 bis 80.000 mPa·s, besonders bevorzugt zwischen 35.000 und 70.000 mPa·s, eingesetzt. Der Bereich der HEC-Produkte mit einer geringen Oberflächenquellung, die für den Anwender zur Verfügung standen lag bisher bei 3.000 bis 30.000 mPa·s. Durch die erfindungsgemäßen MHEHPC wird nun auch der Bereich höherer Viskositäten 30.000 bis 80.000 mPa·s, besonders bevorzugt zwischen 35.000 und 70.000 mPa·s, erschlossen. Die Viskosität wird bestimmt durch die Messung einer wässrigen Lösung in einem Haake Rotovisko VT 550 mit einem Messkörper nach DIN 53019 bei 20 °C bei der oben angegebenen Konzentration und der angegebenen Schergeschwindigkeit.

Die erfindungsgemäßen Celluloseether werden üblicherweise als Pulver eingesetzt deren Teilchengröße x₅₀ zwischen 50 und 500 µm liegt. Die Teilchengröße x₅₀ ist definiert als diejenige Teilchengröße, von der ausgehend 50 Gew.-% des Aufgabegutes kleiner x ist und 50 Gew.-% mindestens x ist. Bevorzugt passieren alle Partikel ein 300 µm Sieb, jeweils bestimmt durch Siebanalyse nach DIN 66165.

Die erfindungsgemäßen Celluloseether können als Mischung oder in Kombination mit anderen Verdickern auf Cellulosebasis oder synthetischen Verdickern eingesetzt werden.

Bevorzugt werden die erfindungsgemäßen Celluloseether lösungsverzögert eingestellt. Dies heißt, dass die Celluloseether beispielsweise durch eine reversible Vernetzung zeitlich begrenzt wasserunlöslich sind. Bei Kontakt mit Wasser gehen die Celluloseetherpartikel nicht in Lösung, sondern können zunächst leicht dispergiert werden. Das In-Lösung-Gehen wird dann beispielsweise durch eine Temperaturerhöhung oder pH-Wert-Änderung herbeigeführt. Ein bevorzugtes Mittel zur Lösungsverzögerung ist Glyoxal, welches nach Methoden gemäß dem Stand der Technik in den Celluloseether eingebracht oder auf die Oberfläche aufgebracht wird.

Die erfindungsgemäßen ternären Celluloseether weisen eine geringe Oberflächenquellung in wässriger Dispersion auf. Unter Oberflächenquellung soll die physikalische Bindung von Wasser durch das Cellulosederivat verstanden werden, ohne dass das Cellulosederivat in Lösung geht. Bei kleinen Partikel kann hier teilweise nicht zwischen einer Oberflächenquellung des Partikels und einer Quellung des gesamten Partikels unterschieden werden.

Eine besonders praxisnahe Bestimmungsmethode für die Oberflächenquellung, ausgedrückt durch den Quellungswert, besteht in der Herstellung einer konzentrierten schwach sauren Celluloseethersuspension und anschließender Beobachtung der Rührbarkeit. Die erfindungsgemäßen Produkte sind bei einer Slurrykonzentration von 14 g, bevorzugt von 16 g Celluloseether /100 ml Wasser noch über mindestens eine Minute lang rührbar. Bei der Methode ist sicherzustellen, dass die physikalische Bindung von Wasser gemessen wird. Dies kann durch eine ausreichende Lösungsverzögerung, beispielsweise durch Glyoxalvernetzung, erreicht werden. Durch Einstellung eines schwach sauren pH-Wertes wird dann ein In-Lösung-Gehen des glyoxalbehandelten Celluloseethers verhindert. Das genaue Verfahren zur Bestimmung des Quellungswertes wird bei den Beispielen beschrieben.

Die erfindungsgemäßen Celluloseether weisen im allgemeinen eine hohe High-Shear-Viskosität bei einer Scherrate von 500 s⁻¹ (V₅₀₀) von mindestens 270 · x · mPa·s auf. Dabei ist x die zur Herstellung einer wässrigen Lösung des Celluloseethers mit einer Viskosität bei einer Scherrate von 2.55 s⁻¹ (V_{2.55(x)}) von 9.500-10.500 mPa·s notwendige Einsatzmenge in Gew.-% bezogen auf die fertige Lösung. Die Bedingung V₅₀₀ ≥ 270 · x · mPa·s muss dabei nicht im gesamten Bereich V_{2.55(x)} = 9.500 bis 10.500 mPa·s gelten. Es reicht aus, wenn für einen Wert x eine Viskosität V_{2.55(x)} erhalten wird, die im Bereich von 9.500 bis 10.500 mPa·s liegt.

Die High-Shear-Viskosität bedeutet hierbei, dass die Viskosität der wässrigen Lösung des Cellulosederivates bei einer Schergeschwindigkeit von 500 1/s bestimmt wird, wobei die Viskosität dieser Lösung bei 2,55 1/s durch passende Einsatzmenge auf 10000 mPa·s +/- 500 mPa·s eingestellt wurde. Es ist erstrebenswert, dass in der Dispersionsfarbe eine möglichst hohe High-Shear-Viskosität erreicht wird, ohne dass die Dispersionsfarbe insgesamt zu zähfließend wird, d.h. die Viskosität des Systems sollte nicht höher als beispielsweise 9.500-10.500 mPa·s liegen.

Da Dispersionsfarben im Produktionsprozess oder bei der späteren Spedition, Lagerung oder Anwendung durchaus Temperaturen bis 65 °C ausgesetzt sein können, ist es sehr erwünscht, dass der Flockpunkt der Cellulosederivate mindestens über 65 °C liegt. Hierdurch wird ein ausreichender Abstand zu den üblicherweise in der Praxis vorkommenden Temperaturen gewahrt. Der thermische Flockpunkt in Wasser bedeutet, dass ein in Wasser gelöstes Cellulosederivat bei Temperaturerhöhung der Celluloseetherlösung des Lösungszustand verlässt. An diesem Punkt ergeben sich deutliche Eigenschaftsänderungen des Systems Celluloseether-Wasser. Diese Eigenschaftsänderungen können beispielsweise rheologisch oder optisch gemessen werden. Die Veränderung der rheologischen Eigenschaften kann im Anwendungssystem Dispersionsfarbe beispielsweise zu einer Zerstörung der bis dahin stabilen Dispersion führen und somit zur Unbrauchbarkeit der Farbe. Die erfindungsgemäßen Celluloseether weisen einen thermischen Flockpunkt (= Flocktemperatur) in Wasser von über 65 °C, bevorzugt mindestens 70 °C, bevorzugter mindestens 72 °C auf. Das genaue Verfahren zur Bestimmung der Flocktemperatur wird bei den Beispielen beschrieben.

Das erfindungsgemäße Verfahren zur Herstellung der neuen ternären Celluloseether umfasst nun folgende Schritte:
a) Die Ausgangscellulose wird mit 1,5 bis 5,5 Äquivalenten Alkalihydroxid pro Anhydroglucoseeinheit (AGU), eingesetzt vorzugsweise als wässrige Lauge, alkalisiert,
b) die alkalisierte Cellulose aus Schritt a) wird in Gegenwart eines Suspensionsmittels, welches Alkylhalogenid in der nach folgender Formel berechneten Menge A = [Äquivalente Alkalihydroxid pro AGU minus 1,4] bis [Äquivalente Alkalihydroxid pro AGU plus 0,8] enthält, mit Ethylenoxid und Propylenoxid bei einer Temperatur größer 65°C umsetzt,
c) dann wird weiteres Alkylhalogenid in einer Menge B aus mindestens der Differenz zwischen der bereits zudosierten Menge A an Äquivalenten Alkylhalogenid pro AGU und der zudosierten Menge Alkalihydroxid pro AGU, wobei diese Menge B minimal 0,2 Äquivalente pro AGU beträgt, zudosiert,
d) gegebenenfalls wird weiteres Alkalihydroxid bei größer 65°C zugesetzt, und
e) die so erhaltene Alkylhydroxyalkylcellulose wird aus dem Reaktionsproduktgemisch isoliert und erforderlichenfalls gereinigt.

Als geeignetes Ausgangsmaterial ist Cellulose in Form von Holzzellstoff oder Baumwoll-Linters zu nennen. Die Lösungsviskosität der Veretherungsprodukte lässt sich durch geeignete Auswahl der Ausgangscellulose in weiten Bereichen variieren. Bevorzugt geeignet sind gemahlener Holzzellstoff und gemahlene Linters-Cellulose oder Mischungen aus diesen.

Die Alkalisierung (Aktivierung) der Polysaccharide erfolgt mit anorganischen Basen, bevorzugt mit Alkalihydroxiden in wässriger Lösung, wie Natriumhydroxid und Kaliumhydroxid, bevorzugt mit 35 bis 60%iger Natronlauge, besonders bevorzugt mit 48 bis 52%iger Natronlauge.

Als Suspensionsmittel können Dimethylether (DME), C₅-C₁₀-Alkane, wie z.B. Cyclohexan oder Pentan, Aromaten, wie z.B. Benzol oder Toluol, Alkohole, wie z.B. i-Propanol oder t-Butanol, Ketone, wie z.B. Butanon oder Pentanon, offenkettige oder cyclische Ether, wie z.B. Dimethoxyethan oder 1,4-Dioxan, sowie Mischungen der angeführten Suspensionsmittel in wechselnden Mengenverhältnissen eingesetzt werden. Das besonders bevorzugte inerte Suspensionsmittel ist Dimethylether (DME).

Im Folgenden wird das Verfahren allgemein unter Verwendung des bevorzugten inerten Suspensionsmittels DME beschrieben:

Die Alkalisierung der eingesetzten Cellulose erfolgt mit 1,5 bis 5,5 eq NaOH pro Anhydroglucoseeinheit (AGU), bevorzugt mit 1,8 bis 3,0 eq NaOH pro AGU, besonders bevorzugt mit 2,0 bis 2,5 eq NaOH pro AGU. In der Regel wird die Alkalisierung bei Temperaturen von 15 bis 50 °C, bevorzugt um 40 °C, und während 20 bis 80 Minuten, bevorzugt während 30 bis 60 Minuten, durchgeführt. Bevorzugt wird das NaOH in Form einer 35 bis 60 gewichtsprozentigen wässrigen Lösung eingesetzt, besonders bevorzugt als 48 bis 52%ige Natronlauge.

Anschließend wird die so erhaltene Alkalicellulose in einem Gemisch aus DME und einer ersten Menge an Methylchlorid (MCI I) suspendiert. Die Menge an MCL I ist wie folgt charakterisiert, wobei die Einheit "eq" für das molare Verhältnis des jeweiligen Einsatzstoffes relativ zur Anhydroglucoseeinheit (AGU) der eingesetzten Cellulose steht:

Minimal eq MCL I = eq NaOH pro AGU minus 1,4, bevorzugt minus 1,0, besonders bevorzugt minus 0,6 sowie maximal eq MCL I = eq NaOH pro AGU plus 0,8, bevorzugt plus 0,5, besonders bevorzugt plus 0,3.

Die bevorzugte Menge an MCL I beträgt: minimal eq MCL I = eq NaOH pro AGU minus 1,0 sowie maximal eq MCL I = eq NaOH pro AGU plus 0,3.

Die besonders bevorzugte Menge an MCL I beträgt: minimal eq MCL I = eq NaOH pro AGU minus 0,5 sowie maximal eq MCL I = eq NaOH pro AGU plus 0,1.

Die am meisten bevorzugte Menge an MCL I beträgt minimal eq MCL I = eq NaOH pro AGU minus 0,5 sowie maximal eq MCL I = eq NaOH pro AGU minus 0,1.

Das Verhältnis DME/MCL I beträgt in der Regel 90/10 bis 30/70 Gewichtsteile, bevorzugt 80/20 bis 45/55 Gewichtsteile und besonders bevorzugt 75/25 bis 60/40 Gewichtsteile.

Nach der Suspendierung der Alkalicellulose in dem DME/MCI-Gemisch werden die Hydroxyalkylierungsmittel Ethylenoxid (EO) und Propylenoxid (PO) zudosiert und die Reaktion thermisch durch Aufheizen forciert. Die Zugabe der Hydroxyalkylierungsmittel kann auch während der Aufheizphase geschehen. Die Reaktion mit den Hydroxyalkylierungsmitteln und MCL I erfolgt bei 60 bis 110 °C, bevorzugt bei 70 bis 90 °C, besonders bevorzugt bei 75 bis 85 °C.

Je nach angestrebter Substitutionshöhe liegt die anzuwendende EO Menge bei 0,20 bis 3,25 eq pro AGU, bevorzugt bei 0,38 bis 1,85 eq pro AGU, besonders bevorzugt bei 0,48 bis 1,30 eq pro AGU. Die Zugabe des EO zum Reaktionssystem erfolgt in einem oder portioniert in mehreren Dosierschritten gegebenenfalls gleichzeitig oder gemischt mit dem zu dosierenden PO. Die Zugabe von EO und PO kann alternativ auch nacheinander erfolgen, wobei die Reihenfolge variieren kann.

Je nach angestrebter Substitutionshöhe liegt die anzuwendende PO Menge bei 0,44 bis 4,00 eq pro AGU, bevorzugt bei 0,53 bis 2,35 eq pro AGU, besonders bevorzugt bei 0,63 bis 1,50 eq pro AGU. Die Zugabe des PO zum Reaktionssystem kann in einem oder portioniert in mehreren Dosierschritten erfolgen, bevorzugt ist die Dosierung in einem Schritt gegebenenfalls gleichzeitig oder gemischt mit dem zu dosierenden EO.

Am meisten bevorzugt ist die kontinuierliche Zugabe eines Gemisches aus EO und PO.

Nach der ersten Veretherungsphase wird ohne wesentliche Abkühlung die für die gewünschte Substitution mit Methylgruppen erforderliche zweite Menge Methylchlorid (MCL II) zugegeben, die wie folgt charakterisiert ist: minimal eq MCL II = eq NaOH minus eq MCL I plus 0,3, oder minimal eq MCL II = 0,2 eq MCL pro AGU, wenn die nach der vorangegangenen Formel berechnete Menge MCL II kleiner als 0,2 eq MCL pro AGU ist. Bevorzugt werden eq MCL II = 1 bis 3,5 eq MCL pro AGU, besonders bevorzugt eq MCL II = 1,5 bis 2,5 eq MCL pro AGU eingesetzt. Die Zugabe der Menge MCL II erfolgt bei einer Temperatur größer 65 °C, bevorzugt bei 75 bis 90°C, beziehungsweise bei der Temperatur, die am Ende der Hydroxyalkylierungsphase herrscht.

Wahlweise wird anschließend zur Einstellung eines höheren DS (M) ohne wesentliche Abkühlung eine weitere Menge Alkalihydroxid in Form einer wässrigen Lösung zudosiert. Bevorzugt wird NaOH in Form einer 35 bis 60 gewichtsprozentigen wässrigen Lösung eingesetzt, besonders bevorzugt als 48 bis 52 %ige Natronlauge. Bevorzugt werden 0,2 bis 1,9 eq NaOH II pro AGU als Nachdosierung eingesetzt, besonders bevorzugt werden 0,4 bis 1,5 eq NaOH II pro AGU als Nachdosierung eingesetzt, am meisten bevorzugt werden 0,6 bis 1,1 eq NaOH II pro AGU als Nachdosierung eingesetzt.

Nach Ende der zweiten Veretherungsphase werden alle flüchtigen Bestandteile destillativ unter ggf. Anwendung von vermindertem Druck abgetrennt. Die Reinigung, Trocknung und Mahlung des resultierenden Produktes erfolgt nach den in der Cellulosederivat-Technologie üblichen Methoden gemäß dem Stand der Technik.

### Beispiele

Die **Flocktemperatur** wird wie folgt bestimmt: Eine 0,1 Gew.-%, bezogen auf die fertige Lösung, Celluloseether enthaltende wässrige Prüflösung wird unter Rühren (Magnetrührer) mit einer Heizrate von 2 °C/min auf eine Temperatur größer 95 °C aufgeheizt. Verwendet wird ein Umwälzthermostat mit Temperaturprogrammgeber, Kühlaggregat und Wärmeübertragungsmedium für Temperaturen von 20 bis 130 °C sowie ein daran angeschlossenes temperierbares Rührgefäß mit Doppelmantel. Die durch Ausflocken des Celluloseethers verursachte Trübung wird über die Lichtabsorption bei 450 nm mit einem Lichtleiterphotometer 662 (Fa. Metrohm) gemessen und gegen die Temperatur der Lösung registriert. Der Kurvenast für ansteigende Temperatur weist in der Regel einen relativ scharfen Knick auf, der den Flockpunkt und damit die Flocktemperatur markiert. Es wird eine Tangente an die Basislinie sowie eine Tangente durch den Wendepunkt der Extinktionstemperaturkurve gelegt. Am Schnittpunkt der Tangenten wird die Flocktemperatur auf 0,1 °C abgelesen. Der Fehlerbereich liegt erfahrungsgemäß bei etwa ± 0,3 - ± 0,5 °C.

Die Viskosität wird bestimmt durch die Messung einer wässrigen Lösung in einem Haake Rotovisko VT 550 mit einem Messkörper nach DIN 53019 bei 20 °C bei den jeweils angegebenen Konzentrationen und den jeweils angegebenen Scherraten.

Der **Quellungswert** wird wie folgt bestimmt: Es werden in einem 400 mL-Becherglas (hohe Form) mit 100,00 g Leitungswasser 0,200 g NaH₂PO₄ innerhalb von ca. 3 min vollständig (visuelle Kontrolle) gelöst. Die Lösung wird bei Raumtemperatur von 20 +/- 0,5 °C mit einem handelsüblichen Magnetrührer (z.B. der Fa. IKA: IKA RET basic oder IKAMAG RET) bei anfänglich 500 UpM mit einem handelsüblichen teflonbeschichteten stäbchenförmigen Rührmagneten (40 x 8 mm) gerührt. Daraufhin werden zum Zeitpunkt t = 0 (Stoppuhr) zunächst 2,000 g des zu untersuchenden glyoxalbehandelten Celluloseethers zügig in die Mitte der Becherglasoberfläche zugegeben. Der Celluloseether wird mit Glyoxal behandelt, und zwar nach dem Verfahren gemäß Beispiel 5, Seite 4-5 der EP1316563A1. Sodann werden alle 60 s jeweils weitere 2,000 g Celluloseether hinzugefügt, wobei die Drehzahl des Magnetrührers angepasst, also erhöht wird. Die Prüfung wird abgebrochen, wenn die Suspension nicht mehr rührbar ist. Das ist dann der Fall, wenn der Celluloseether zumindest teilweise länger als 1 Minute an der Oberfläche liegen bleibt. Die maximal dispergierbare, also noch rührbare Menge an Celluloseether entspricht der Summe der schrittweise zugesetzten Celluloseethermenge bis einschließlich der letzten Zugabemenge, die noch vollständig eingerührt wurde. Eine anteilige Zugabemenge, die noch dispergiert worden sein mag, obwohl der Rest an Zugabemenge sich nicht mehr einrühren ließ, wird nicht berücksichtigt. Nachdem 14 g, bevorzugt 16 g zugegeben wurden, wird der Test beendet. In diesem Fall ist eine ausreichend geringe Quellung vorhanden.

### Beispiele zu Flocktemperatur und Quellung

An den folgenden Beispielen 4 bis 9 und Vergleichsbeispielen 1 bis 3 und 10 bis 12 ist ersichtlich, dass die erfindungsgemäßen MHEHPC sowohl eine ausreichend hohe Flocktemperatur als auch gute Quellungswerte aufweisen.

| **Bsp/ Vergl-Bsp** | **DS M** | **MS HE** | **MS HP** | **V2 mPa·s** | **Flocktemperatur °C** | **Quellungswert g** |
|---|---|---|---|---|---|---|
| Vergl-Bsp 1 | 1,1 | 0 | 1,04 | 37.000 | 65 | 12 |
| Vergl-Bsp 2 | 1,1 | **0,13** | 1,12 | 34.000 | 65 | **≥ 16** |
| Vergl-Bsp 3 | **1,41** | 0 | **0,4** | 39.600 | **69** | 10 |
| Bsp 4 | **1,42** | **0,11** | **0,42** | 38.700 | **70** | **14** |
| Bsp 5 | **1,42** | **0,25** | **0,41** | 37.800 | **72** | **≥ 16** |
| Bsp 6 | **1,44** | **0,37** | **0,45** | 67.300 | **73** | **≥ 16** |
| Bsp 7 | **1,41** | **0,39** | **0,43** | 38.200 | **74** | **≥ 16** |
| Bsp 8 | **1,35** | **0,40** | **0,48** | 56.100 | **76** | **≥ 16** |
| Bsp 9 | **1,22** | **0,44** | **0,57** | 55.100 | **80** | **≥ 16** |
| Vergl-Bsp 10 | **1,33** | **0,32** | 0,18 | 81.000 | **84** | 6 |
| Vergl-Bsp 11 | **1,34** | **0,31** | 0,09 | 85.000 | **86** | 10 |
| Vergl-Bsp 12 | **1,36** | **0,32** | 0 | 92.000 | **91** | 8 |

Ähnlich gute Quellungswerte werden von Hydroxyethylcellulose (HEC) und Ethylhydroxyethylcellulose (EHEC) erreicht. Diese weisen jedoch eine geringe High-Shear-Viskosität auf.

### Beispiele zu High-Shear-Viskosität

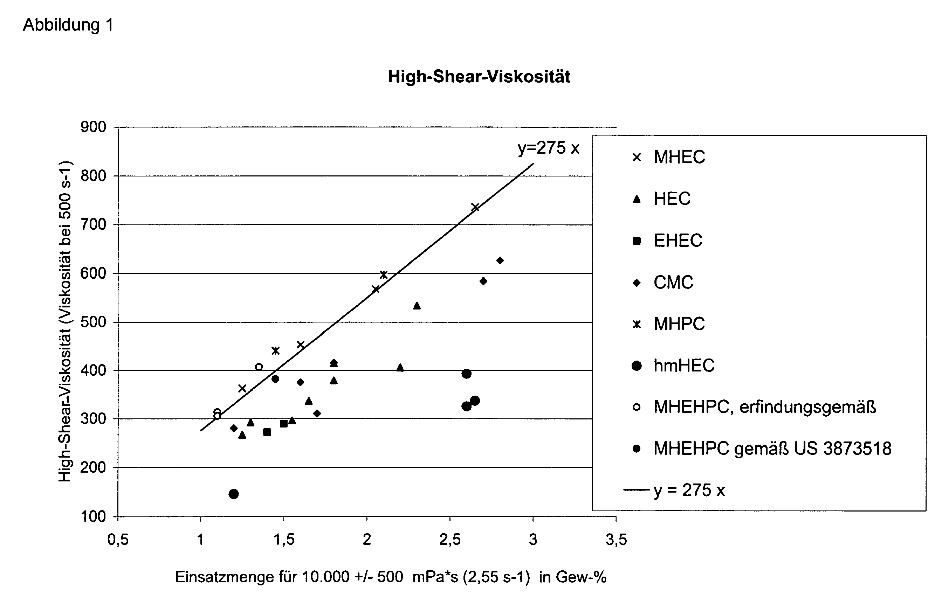

Aus Abbildung 1 ist ersichtlich, dass HEC, hmHEC (hydrophob modifizierte HEC), CMC und EHEC gegenüber MHEC und MHPC sowie den erfindungsgemäßen MHEHPC den Nachteil einer geringeren High-Shear-Viskosität aufweisen.

| | | Viskosität bei Schergeschwindigkeit | | | |
|---|---|---|---|---|---|
| Muster | Konzentr. Gew.-% | 2.55 s-1 mPa·s | 500 s-1 mPa·s | z = V₅₀₀/x | |
| | x | V_{2.55} | V₅₀₀ | z | z ≥ 270 |
| **MHEC (Vergleich)** | | | | | |
| MT 4000 PV, 4C174 | 2,65 | 9.780 | 736 | **278** | J |
| MT 10000 PV, 3I072 | 2,05 | 10.060 | 568 | **277** | J |
| MT 20000 PV, 4A010 | 1,60 | 9.890 | 453 | **283** | J |
| MT 40000 PV, 4E293 | 1,25 | 9.870 | 363 | **290** | J |
| Tylose MH 30.000 YP2 #6342 | 1,60 | 10.846 | 559 | **349** | J |

| **MHPC (Vergleich)** | | | | | |
|---|---|---|---|---|---|
| Methocel J 75 MS | 1,45 | 9.995 | 441 | **304** | J |
| Methocel 366 | 2,10 | 10.430 | 597 | **284** | J |

| **HEC (Vergleich)** | | | | | |
|---|---|---|---|---|---|
| Natrosol 250 MBR, # 6237 | 2,20 | 10.180 | 406 | 185 | N |
| Natrosol 250 HBR, # 6238 | 1,55 | 10.160 | 296 | 191 | N |
| Natrosol 250 H4BR, # 6278 | 1,40 | 9.740 | 273 | 195 | N |
| Natrosol 250 HHR, # 6279 | 1,25 | 9.430 | 266 | 213 | N |
| Natrosol 250 HR, # 6280 | 1,65 | 10.080 | 336 | 204 | N |
| Cellosize QP 15000 | 1,80 | 9.575 | 379 | 211 | N |
| Tylose H 6000 YP2 | 2,30 | 10.520 | 534 | 232 | N |
| Tylose H 30.000 YP2 | 1,80 | 10.040 | 415 | 230 | N |
| Tylose H 100.000 YP2 | 1,30 | 9.996 | 292 | 225 | N |

| **EHEC (Vergleich)** | | | | | |
|---|---|---|---|---|---|
| Bemocoll EBS 451 FQ | 1,50 | 10.070 | 289 | 193 | N |
| Bemocoll EBS 481 FQ | 1,40 | 9.857 | 272 | 194 | N |

| **CMC (Vergleich)** | | | | | |
|---|---|---|---|---|---|
| CRT 40.000 PV | 1,20 | 10.236 | 280 | 233 | N |
| CRT 20.000 PV | 1,70 | 9.890 | 310 | 183 | N |
| CRT 10.000 PV | 1,80 | 9.809 | 416 | 231 | N |
| CRT 3.000 PV | 2,80 | 10.170 | 626 | 224 | N |
| Celflow S-200 | 1,60 | 10.471 | 375 | 234 | N |
| Celflow S-50 | 2,70 | 10.006 | 584 | 216 | N |

| **hmHEC (Vergleich)** | | | | | |
|---|---|---|---|---|---|
| Natrosol plus 330 PA/1 (TCS) | 2,60 | 9.030 | 325 | 125 | N |
| Natrosol plus 330 PA/2 (TCS) | 2,65 | 9.693 | 337 | 127 | N |
| Natrosol plus 330 CS | 2,60 | 10.380 | 393 | 151 | N |
| Natrosol plus 430 PA | 1,20 | 9.873 | 145 | 121 | N |
| Tylose E 60210 | 2,50 | 9.681 | 371 | 148 | N |
| Tylose E 60302 | 1,50 | 9.929 | 233 | 155 | N |

| **MHEHPC** | | | | | |
|---|---|---|---|---|---|
| Bsp 5 (Erfindung) | 1,35 | 11.160 | 407 | **302** | J |
| Bsp 8 (Erfindung) | 1,10 | 9.712 | 314 | **285** | J |
| Bsp 9 (Erfindung) | 1,10 | 10.250 | 306 | **278** | J |
| Vergl-Bsp 13 | 1,45 | 9.730 | 382 | 263 | N |

Das Vergleichsbeispiel 13 gemäß US 3873518 (Strange et al) und die erfindungsgemäßen MHEHPC wiesen folgende Substitutionsgrade auf:

| Beispiel | DS M | MS HE | MS HP |
|---|---|---|---|
| Bsp 5 (Erfindung) | **1,42** | **0,25** | **0,41** |
| Bsp 8 (Erfindung) | **1,35** | **0,40** | **0,48** |
| Bsp 9 (Erfindung) | **1,22** | **0,44** | **0,57** |
| Vergl-Bsp 13 | 1,12 | **0,5** | 1,05 |

### Herstellungsbeispiel

In einem 400 I Autoklaven werden 24,7 kg gemahlener Holzzellstoff und 10,4 kg gemahlener Baumwoll-Linters durch Evakuieren und Beaufschlagen mit Stickstoff inertisiert. Anschließend wird ein Gemisch aus 57,4 kg Dimethylether und 1,9 mol eq Chlormethan in den Reaktor dosiert. Dann werden 2,2 mol eq Natriumhydroxid in Form einer 50gew.-%igen wässrigen Natronlauge unter Mischen in ca. 10 Minuten auf die Cellulose gesprüht. Über die gesamte Reaktionsphase hinweg wird das Reaktionssystem weiterhin gemischt. Es wird weitere 35 Minuten alkalisiert. Die Dosierung der Lauge und die anschließende Alkalisierung verlaufen unter einen Temperaturanstieg von ca. 25 °C auf ca. 40 °C. Dann werden 0,60 mol eq Ethylenoxid über ca. 30 min in den Reaktor dosiert. Anschließend werden 1,05 mol eq Propylenoxid über ca. 35 min in den Reaktor dosiert. Während der Dosierung der Alkylenoxide wird das Gemisch langsam auf ca. 80 °C geheizt. Nachdem weitere 40 Minuten bei dieser Temperatur gemischt worden ist, wird in 15 min auf ca. 85 °C geheizt und dann werden über 10 Minuten 2,20 mol eq Methylchlorid in den Reaktor dosiert. Anschließend wird weitere 50 Minuten bei dieser Temperatur umgesetzt. Danach werden die flüchtigen Bestandteile abdestilliert und der Reaktor evakuiert.

Das Rohprodukt wird einer Wäsche mit heißem Wasser unterworfen, anschließend granuliert getrocknet und gemahlen. Während des Granulierschrittes wird 1 Gew.-% Glyoxal, bezogen auf die trockene MHEHPC-Masse eingearbeitet.

Der Substitutionsgrad der so erhaltenen Methylhydroxyethylhydroxypropylcellulose durch Methylgruppen (DS M) betrug 1,41, der Substitutionsgrad durch Hydroxyethylgruppen (MS HE) betrug 0,39, der Substitutionsgrad durch Hydroxypropylgruppen (MS HP) betrug 0,43.

Die Viskosität einer Lösung dieser Celluloseether in Wasser bei einer Einsatzmenge von 2 Gew.-% und einem Schergeschwindigkeit von 2,55 1/s, gemessen bei 20 °C betrug 38.200 mPa·s.

## Patentansprüche

1. Methylhydroxyethylhydroxypropylcellulose (MHEHPC), **gekennzeichnet durch** einen MS (HE) von 0,10 bis 0,70, einen MS (HP) von 0,30 bis 1,00, und einen DS (M) von 1,15 bis 1,80.

2. MHEHPC nach Anspruch 1 mit einer Viskosität im Bereich zwischen 100 und 200.000 mPa·s.

3. MHEHPC nach Anspruch 1 oder 2, wobei der gesamte Hydroxyalkylierungsgrad MS (HE) + MS (HP) 0,45 bis 1,60 beträgt.

4. MHEHPC nach einem der vorherigen Ansprüche, wobei die MHEHPC in Pulverform mit einer Teilchengröße zwischen 50 und 500 µm vorliegt.

5. MHEHPC nach einem der vorherigen Ansprüche, wobei die MHEHPC einen Quellungswert von mindestens 14 g aufweist.

6. MHEHPC nach einem der vorherigen Ansprüche, wobei die MHEHPC eine Flocktemperatur von über 65 °C aufweist.

7. MHEHPC nach Anspruch 6, wobei die MHEHPC eine High-Shear-Viskosität von V₅₀₀ ≥ 270 · x · mPa·s aufweist, wobei x die zur Herstellung einer wässrigen MHEHPC-Lösung mit einer Viskosität bei einer Scherrate von 2.55 s⁻¹ (V_{2.55(x)}) von 9.500-10.500 mPa·s notwendige Einsatzmenge MHEHPC in Gew.-% bezogen auf die fertige Lösung angibt.

8. Verfahren zur Herstellung einer MHEHPC nach einem der vorherigen Ansprüche, wobei
a) die Ausgangscellulose mit 1,5 bis 5,5 Äquivalenten Alkalihydroxid pro AGU alkalisiert wird,
b) die alkalisierte Cellulose aus Schritt a) in Gegenwart eines Suspensionsmittels, welches Alkylhalogenid in einer Menge A = [Äquivalente Alkalihydroxid pro AGU minus 1,4] bis [Äquivalente Alkalihydroxid pro AGU plus 0,8] enthält, mit Ethylenoxid und Propylenoxid bei einer Temperatur größer 65 °C umgesetzt wird,
c) dann weiteres Alkylhalogenid in einer Menge B aus mindestens der Differenz zwischen der bereits zudosierten Menge A an Äquivalenten Alkylhalogenid pro AGU und der zudosierten Menge Alkalihydroxid pro AGU, wobei diese Menge B minimal 0,2 Äquivalente pro AGU beträgt, zudosiert wird,
d) gegebenenfalls weiteres Alkalihydroxid bei größer 65 °C zugesetzt wird, und
e) die so erhaltene Alkylhydroxyalkylcellulose aus dem Reaktionsproduktgemisch isoliert und erforderlichenfalls gereinigt wird.

9. Verwendung einer MHEHPC nach einem der Ansprüche 1 bis 7 in dispersionsgebundenen Baustoffsystemen.
